Europäisches Patentamt

European Patent Office

Office européen des brevets

(19)

(11) **EP 1 610 490 A1**

(12) **DEMANDE DE BREVET EUROPEEN**

(43) Date de publication:
**28.12.2005  Bulletin 2005/52**

(51) Int Cl.$^7$: **H04L 9/12**, H04L 9/18

(21) Numéro de dépôt: **04291561.1**

(22) Date de dépôt: **21.06.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(71) Demandeur: **FRANCE TELECOM**
**75015 Paris (FR)**

(72) Inventeurs:
• **Nourry, Pascal**
**35700 Rennes (FR)**

• **Relier, Stéphanie**
**35410 Domloup (FR)**
• **Daude, Francois**
**35740 Pace (FR)**

(74) Mandataire: **Hassine, Albert**
**Cabinet Plasseraud**
**65/67 rue de la Victoire**
**75440 Paris Cedex 09 (FR)**

(54) **Procédé et dispositif de chiffrement ou déchiffrement de données**

(57)     On chiffre des blocs de données numériques, chaque bloc de données à chiffrer étant associé à une référence temporelle. On définit une valeur d'un vecteur d'initialisation VI et une clé de chiffrement K. Puis, pour chaque bloc de données à chiffrer, on obtient un compteur C, par combinaison de la référence temporelle et de la valeur du vecteur d'initialisation. On obtient une suite d'éléments binaires de chiffrement via une fonction de chiffrement prenant comme paramètres d'entrée la clé de chiffrement K et le compteur C. Puis, on chiffre le bloc de données en le combinant avec la suite d'éléments binaires de chiffrement.

FIG. 1

EP 1 610 490 A1

**Description**

La présente invention est relative au domaine du chiffrement dans les réseaux de télécommunications.

La cryptologie, ou bien l'embrouillage, ou encore le chiffrement, consiste à transformer à l'aide de conventions secrètes des informations compréhensibles par des tiers en informations inintelligibles pour des tiers, ou à réaliser l'opération inverse, appelée déchiffrement, grâce à des moyens conçus à cet effet.

Dans des réseaux de télécommunication de paquets, des paquets de données sont transmis. Un paquet de données comprend classiquement une donnée contenant des informations de transport qui sont principalement liées au traitement de transport dans le réseau, et une donnée dite utile contenant des informations qui sont principalement liées au contenu du message à transmettre et qui doivent être acheminées jusqu'au destinataire.

Dans les réseaux existants, il existe déjà de nombreuses méthodes de chiffrement de données. Certaines de ces méthodes proposent de chiffrer des paquets de données au niveau des données de transport.

Ainsi, dans le domaine des réseaux de type Internet, on connaît un protocole nommé IPsec, pour « Internet Protocole security », qui est défini dans le document standard « Security Architecture for the Internet Protocol » référencé RFC 2401, pour 'Request For Comment'. On connaît également un protocole nommé SRTP, pour « Secure Real-Time Transport Protocol », qui est défini dans un document standard « The Secure Real-time Transport Protocol » référencé RFC 3711. Des protocoles de ce type, sont conçus et adaptés pour chiffrer des données transmises selon un protocole de type IP. Ils présentent l'inconvénient de ne pas s'adapter facilement à d'autre type de transport tels que par exemple le transport de fichiers multimédia ou encore la diffusion dans les réseaux de type DVB, pour « Digital Video Broadcast ».

D'autres solutions proposent des chiffrements conçus et adaptés pour chiffrer des données transmises selon un protocole de type DVB. On connaît notamment une fonction de chiffrement nommé DVB-CSA, pour « Common Scrambling Algorithm », définie dans un document référencé ETR 289, pour 'European telecommunications standards institute Technical Report'. Une telle fonction est particulièrement bien adaptée pour être utilisée dans un flux de données de type MPEG-2 TS, pour MPEG2 Transport Stream, qui est une norme de compression de séquence audio et vidéo.

Un inconvénient de ce type de chiffrement est qu'il ne précise pas de mécanisme de synchronisation entre des données à chiffrer et des clés de chiffrement pour une utilisation d'un tel procédé de chiffrement dans une transmission de données qui ne sont pas codées selon de type MPEG-2 TS. De plus, une fonction de chiffrement de type DVB-CSA n'est pas adaptée pour chiffrer des données utiles de type audiovisuelles d'une taille variable.

Il existe également des fonctions de chiffrement réalisées au niveau des données utiles transportées. On connaît notamment dans un réseau multimédia, une spécification nommée ISMA Encryption and Authentication, pour « Internet Streaming Media Alliance », qui permet de chiffrer des données utiles de type multimédia. La méthode de chiffrement ISMA nécessite la modification de l'en-tête de chaque donnée multimédia afin d'y insérer des informations de chiffrement spécifiques pour des besoins de synchronisation. Ces informations de chiffrement sont généralement des paramètres publics comme par exemple un identifiant unique par donnée à chiffrer ou encore un indicateur de clé de chiffrement.

Un inconvénient de ce type de procédé de chiffrement est qu'il ajoute des informations de synchronisation qui créent un sur débit non négligeable lors de la transmission de telles données chiffrées. Un tel procédé pose également des problèmes de compatibilité avec des logiciels existants résultant de la modification de l'en-tête des données chiffrées.

Ainsi, il est intéressant de définir un procédé de chiffrement permettant de chiffrer des données transportées dans le réseau de télécommunication, de manière indépendante de la couche de transport du réseau utilisée, sans générer de sur débit lié à ce procédé de chiffrement.

La présente invention vise à proposer une solution tendant à satisfaire ces besoins.

Un premier aspect de la présente invention propose un procédé de chiffrement de blocs de données numériques, chaque bloc de données étant associé à une référence temporelle, suivant lequel on définit une valeur d'un vecteur d'initialisation VI et une clé de chiffrement K.

Le procédé comprend, pour chaque bloc de données à chiffrer, les étapes consistant à :

- obtenir un compteur C, par combinaison de ladite référence temporelle et de ladite valeur du vecteur d'initialisation ;
- obtenir une suite d'éléments binaires de chiffrement via une fonction de chiffrement prenant comme paramètres d'entrée ladite clé de chiffrement K et ledit compteur C ;
- chiffrer ledit bloc de données en le combinant avec ladite suite d'éléments binaires de chiffrement.

La présente invention propose donc un procédé de chiffrement basé sur une fonction de chiffrement qui prend comme paramètres d'entrée une clé de chiffrement et un compteur initial afin de les combiner pour délivrer une suite d'éléments binaires de chiffrement.

On note que les termes « bloc de données » font référence à un bloc comprenant un ensemble de données pouvant être une image, une bande son, ou encore une donnée multimédia. Des données de type différent peuvent donc être contenues dans un même bloc de données.

Afin d'assurer, pour chaque bloc de données à chiffrer, une unicité du compteur obtenu par combinaison de la référence temporelle associée au bloc de données à chiffrer et de la valeur du vecteur d'initialisation, on définit une nouvelle valeur du vecteur d'initialisation à une fréquence telle que les références temporelles associées aux blocs de données à chiffrer sont uniques pour une valeur du vecteur d'initialisation donnée. Cette fréquence est donc généralement fonction de la longueur de la référence temporelle associée aux blocs de données à chiffrer.

Dans un mode de réalisation de l'invention, le bloc de données à chiffrer correspond à une donnée utile qui constitue une unité de traitement du côté de l'émetteur ou du côté du récepteur. Notamment, lorsque les données à transmettre sont une séquence d'images, un bloc de données à chiffrer peut être une image. En effet, le traitement d'encodage de telles données est généralement réalisé image après image.

Puis, après avoir chiffré et encodé le bloc de données, en fonction de la taille du bloc de données à chiffrer et de la taille des paquets du réseau de transmission, le bloc de données est transporté dans un ou plusieurs des paquets en tant que donnée utile d'un paquet.

La présente invention couvre d'autre type de bloc de données à chiffrer, dès lors qu'un tel bloc de données est associé à une référence temporelle.

On peut également définir le bloc de données à chiffrer comme la donnée utile d'un paquet à transmettre dans le réseau. Dans ce cas, on peut utiliser une référence temporelle associée au paquet.

Quelque soit le bloc de données à chiffrer, on met en paquet les blocs de données ainsi chiffrés avant de les transmettre à travers le réseau.

Dans un mode de réalisation de l'invention, on décompose le bloc de données à chiffrer en plusieurs sous blocs de longueur fixe déterminée. Il peut donc rester un dernier sous bloc de longueur inférieure à la longueur déterminée. Puis, on chiffre l'un après l'autre tous les sous blocs ainsi obtenus, y compris le dernier sous bloc. Un mode de réalisation de ce type est décrit en détail dans des sections suivantes.

On peut ainsi chiffrer des données d'un réseau de transmission quelque soit la taille des blocs de données à chiffrer. On peut de ce fait chiffrer des blocs de données de tailles très variables.

Un tel procédé de chiffrement selon un mode de réalisation de la présente invention permet également de chiffrer un bloc de données indépendamment des autres blocs de données.

De plus, un tel procédé de chiffrement n'ajoute pas de sur débit lié au chiffrement. En effet, les données sont ainsi chiffrées en fonction d'une référence temporelle qui est déjà incluse dans les données transmises, indépendamment du chiffrement.

Par ailleurs, un système de chiffrement mettant en oeuvre un procédé selon un mode de réalisation de la présente invention peut s'interfacer facilement avec un système de gestion de clé de chiffrement et de droits utilisant comme synchronisation les références temporelles des paquets de données. De tels systèmes sont bien connus de l'homme du métier. Ils ne seront pas détaillés.

Un tel procédé permet également de chiffrer des paquets de données de manière indépendante des couches de transport du réseau de transmission. Ainsi, un mode de réalisation de la présente invention peut être mis en oeuvre dans n'importe quel réseau de transmission de paquets de données.

Un procédé de chiffrement selon la présente invention peut ainsi être avantageusement mis en oeuvre dans un réseau de transport de données multimédia. Dans ce type de réseau, avant d'être émises sur le réseau, les données multimédia sont généralement encodées. Puis, ces données sont décodées à leur réception. Dans ce contexte, un bloc de données à chiffrer peut être définie comme étant la plus petite partie des données transmises qui puisse être traitée par un encodeur et/ou un décodeur. Ainsi, lorsque les données transportées sont une séquence d'images, un bloc de données à chiffrer peut correspondre à une image.

En fonction du réseau de transport utilisé, des données à transmettre, et des données à chiffrer, un paquet transmis sur le réseau peut comprendre soit un ou plusieurs blocs de données chiffrés, soit seulement une partie d'un bloc de données chiffré. La présente invention couvre avantageusement toutes les configurations de paquets de données possibles.

Un deuxième aspect de la présente invention propose un dispositif de chiffrement de blocs de données numériques, chaque bloc de données étant associé à une référence temporelle, suivant lequel on définit une valeur d'un vecteur d'initialisation VI et une clé de chiffrement K. Un tel dispositif comprend des moyens agencés pour mettre en oeuvre un procédé de chiffrement selon le premier aspect de la présente invention.

Un troisième aspect de la présente invention propose un procédé de déchiffrement de blocs de données numériques, chaque bloc de données étant associé à une référence temporelle, les blocs de données étant chiffrés par un procédé de chiffrement selon le premier aspect de la présente invention. On définit une valeur d'un vecteur d'initialisation et une clé de chiffrement synchrone avec la valeur du vecteur d'initialisation et la clé de chiffrement utilisées dans le procédé de chiffrement. Le procédé de déchiffrement comprend, pour chaque bloc de données à déchiffrer, les étapes consistant à :

- obtenir un compteur, par combinaison de ladite référence temporelle et de ladite valeur du vecteur d'initialisation ;
- obtenir une suite d'éléments binaires de déchiffrement via une fonction de déchiffrement prenant comme paramètres d'entrée ladite clé de chiffrement et ledit compteur, ladite fonction de déchiffrement étant équivalente à la fonction de chiffrement utilisée dans ledit procédé de chiffrement ;
- déchiffrer ledit bloc de données chiffré en le combinant avec ladite suite d'éléments binaires de déchiffrement, via une combinaison inverse de celle utilisée dans ledit procédé de chiffrement à l'étape de chiffrement.

Un quatrième aspect de la présente invention propose un dispositif de déchiffrement de blocs de données numériques, chaque bloc de données à déchiffrer étant associé à une référence temporelle, et étant chiffré par un procédé de chiffrement selon le premier aspect de l'invention. Un tel dispositif comprend des moyens agencés pour mettre en oeuvre un procédé de déchiffrement selon le troisième aspect de la présente invention.

Un cinquième aspect de la présente invention propose un produit programme d'ordinateur, destiné à être stocké dans une mémoire d'une unité de traitement, ou sur un support mémoire amovible et destiné à coopérer avec un lecteur de ladite unité de traitement, ledit produit programme d'ordinateur comprenant des instructions pour la mise en oeuvre de tout ou partie des étapes du procédé selon le premier aspect de l'invention.

Un sixième aspect de la présente invention propose un produit programme d'ordinateur, destiné à être stocké dans une mémoire d'une unité de traitement, ou sur un support mémoire amovible et destiné à coopérer avec un lecteur de ladite unité de traitement, ledit produit programme d'ordinateur comportant des instructions pour la mise en oeuvre de tout ou partie des étapes du procédé selon le troisième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 est un schéma des étapes d'un procédé de chiffrement selon un mode de réalisation de l'invention ;
- la figure 2 illustre des étapes principales d'un chiffrement par flux ;
- la figure 3 illustre une opération de chiffrement selon un mode de réalisation de la présente invention par combinaison de ou exclusif ;
- la figure 4 illustre une opération de déchiffrement d'un bloc de données chiffré, selon un mode de réalisation de l'invention ;
- la figure 5 illustre un chiffrement d'un bloc de données à chiffrer associé à une référence temporelle selon un mode de réalisation de la présente invention dans lequel le bloc de données à chiffrer est découpé en une pluralité de sous blocs ;
- la figure 6 illustre un procédé de génération d'un compteur selon un mode de réalisation de la présente invention ;
- la figure 7 illustre un chiffrement et un déchiffrement d'un bloc de données découpé en une pluralité de sous blocs selon un mode de réalisation de la présente invention ;
- la figure 8 illustre un dispositif de chiffrement selon un mode de réalisation de l'invention ;
- la figure 9 illustre un dispositif de déchiffrement selon un mode de réalisation de l'invention.

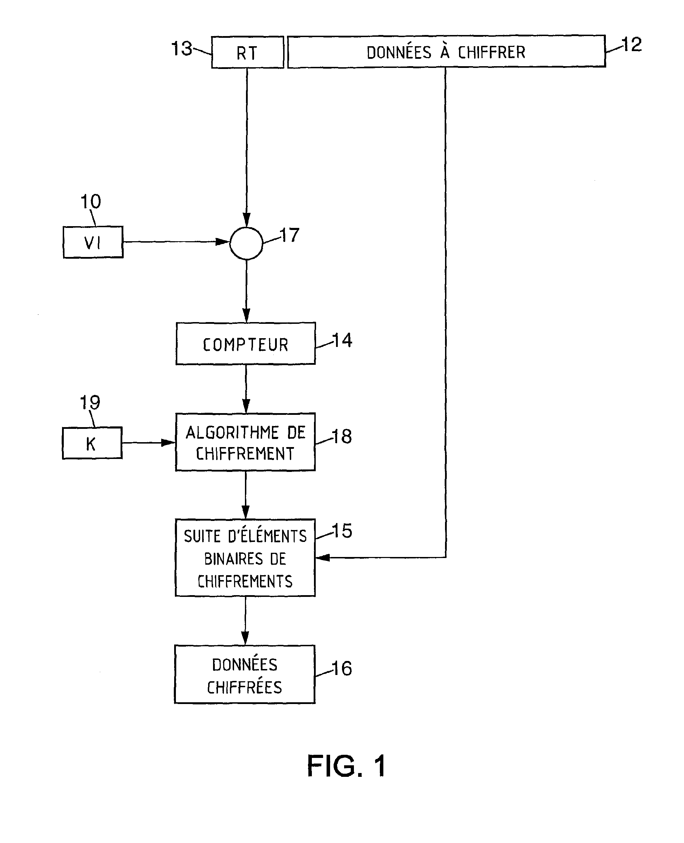

La figure 1 est un schéma des étapes d'un procédé de chiffrement selon un mode de réalisation de la présente invention. Un bloc de données à chiffrer 12 est associé à une Référence Temporelle RT 13. On définit au préalable une valeur de vecteur d'initialisation VI 10. On définit également au préalable une clé de chiffrement K 19.

La présente invention couvre tous les moyens d'obtenir une clé de chiffrement.

La référence temporelle 13 est combinée à la valeur du vecteur d'initialisation 10 par l'opération 17. Dans un mode de réalisation de l'invention, cette combinaison correspond à une opération de ou exclusif. Cette dernière est facile à mettre en oeuvre. Cependant, la présente invention couvre toute autre opération permettant de générer une suite d'éléments binaires à partir d'un vecteur d'initialisation et d'une référence temporelle.

On obtient ainsi un compteur 14. Pour une valeur de vecteur d'initialisation donnée, les références temporelles associées à chacun des blocs de données à chiffrer sont de préférence uniques. Un tel compteur 14 est par conséquent unique pour chacun des blocs de données à chiffrer. Puis, une nouvelle valeur du vecteur d'initialisation est de préférence définie avant que des valeurs des références temporelles déjà associées à des blocs de données à chiffrer soient réutilisées. Par conséquent, dans un mode de réalisation de la présente invention, on définit avantageusement une nouvelle valeur de vecteur d'initialisation à une fréquence qui est fonction de la longueur du format de la référence temporelle associée aux blocs de données à chiffrer.

En gérant ainsi les valeurs du vecteur d'initialisation, on obtient un compteur 14 qui a une valeur unique pour chacun des blocs de données à chiffrer.

Puis, une opération 18 consiste à traiter via une fonction de chiffrement, le compteur ainsi obtenu et la clé de chiffrement définie au préalable. Cette opération permet de fournir une suite d'éléments binaires de chiffrement. Puis, par combinaison de la suite d'éléments binaires de chiffrement et du bloc de données à chiffrer 12, on obtient le bloc de données chiffré 16.

La présente invention couvre toutes les fonctions de chiffrement, ou encore algorithmes de chiffrement. On peut avantageusement utiliser une fonction de chiffrement par flux. Dans ce cas, le chiffrement peut être effectué bit à bit, ou tout au moins sans attendre la réception complète d'un bloc de données à chiffrer. De telles fonctions sont avantageusement mises en oeuvre dans des transmissions de données en flux continu ('streaming' en anglais).

On peut ainsi utiliser des fonctions de chiffrement bien connues par l'homme du métier telles que des fonctions de chiffrement de type AES, pour « Advanced Encryption Standard », normalisé par le NIST, pour « National Institut Standard and Technology », dans un document référencé NIST FIPS 197, FIPS pour « Federal Information Processing Standard». Ce type de fonction de chiffrement supporte avantageusement des clés de chiffrement de longueur égale à 128, 192 ou encore 256 bits, alors que d'autres fonctions de chiffrement ne supportent que des clés de longueur inférieure à 128 bits. Ainsi, le chiffrement peut être plus robuste.

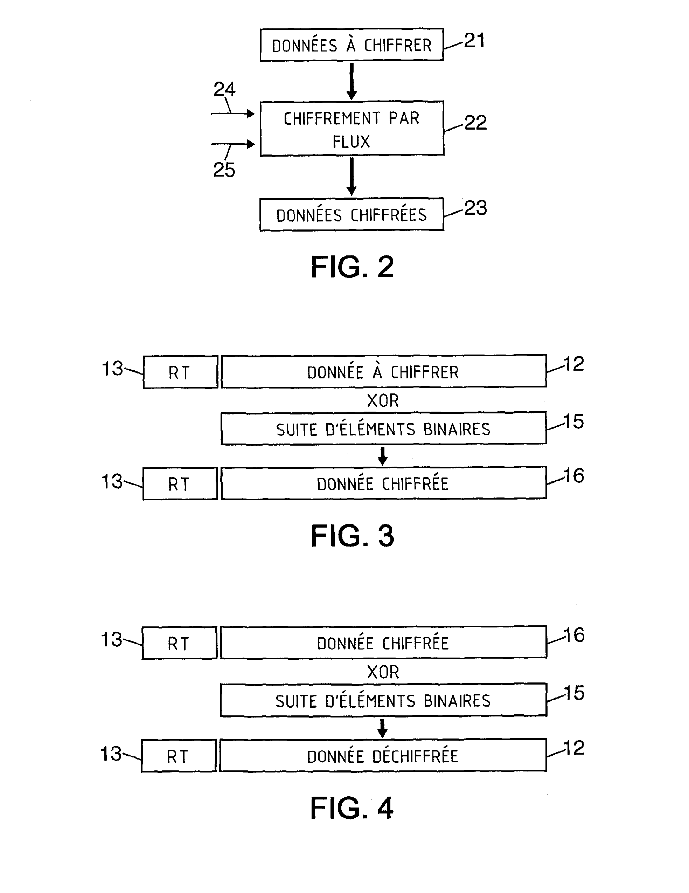

La figure 2 illustre les étapes principales d'un chiffrement par flux. Ainsi, une fonction de chiffrement par flux 22, 'stream cipher' en anglais, prend comme paramètre d'entrée 24 un compteur et comme paramètre d'entrée 25 une clé de chiffrement pour fournir une suite d'éléments binaires de chiffrement. Cette suite d'éléments binaires de chiffrement est alors combinée avec le bloc de données à chiffrer 21 pour fournir enfin le bloc de données chiffré correspondante 23.

Puis, un bloc de données ainsi chiffré peut alors être mis en paquet dans un ou plusieurs paquets de données à transmettre via le réseau.

La figure 3 illustre une opération de chiffrement selon un mode de réalisation de la présente invention par combinaison de ou exclusif.

Le bloc de données à chiffrer 12 est associé à une référence temporelle 13. La suite d'éléments binaires de chiffrement est combinée au bloc de données à chiffrer par une opération de ou exclusif pour fournir le bloc de données chiffré 16. Ce bloc de données chiffré 16 est associé à la référence temporelle 13, égale à la référence temporelle associée au bloc de données à chiffrer 12.

Une transmission du bloc de données ainsi chiffré peut ensuite être réalisée de la même façon que n'importe quel bloc de données. En effet, selon un mode de réalisation de l'invention, le bloc de données à chiffrer et le bloc de données chiffré sont de longueur identique. Le procédé de chiffrement n'a pas d'effet sur la mise en paquet et la transmission des données. Comme cela a déjà été décrit, le procédé de chiffrement est avantageusement indépendant de la couche de transport du réseau utilisé et n'introduit pas de sur débit dans le transport de telles données.

Dans un mode de réalisation de l'invention, côté récepteur des données, on effectue une opération de déchiffrement des blocs de données reçus. Quelque soit la méthode de transmission utilisée, qu'un paquet de données reçu comprenne un ou plusieurs blocs de données chiffrés, ou qu'il ne comprenne qu'une partie d'un bloc de données chiffré, côté récepteur, on déchiffre le bloc de données chiffré. Un tel bloc de données chiffré est reçu de telle façon qu'il est associé à une référence temporelle.

Dans un mode de réalisation de la présente invention, le récepteur de blocs de données chiffrés est informé de la valeur courante du vecteur d'initialisation et de la clé de chiffrement utilisé dans le procédé de chiffrement. La présente invention couvre toutes méthodes permettant au récepteur de connaître ces informations de façon synchrone avec leur utilisation dans le procédé de chiffrement. De telles méthodes sont bien connues de l'homme du métier.

Par ailleurs, de préférence, on utilise dans le procédé de déchiffrement la même fonction de chiffrement que celle utilisée dans le procédé de chiffrement utilisé côté émetteur.

Sur réception d'un bloc de données chiffré, on effectue la même opération de combinaison de la valeur du vecteur d'initialisation et de la référence temporelle du bloc de données chiffré pour obtenir le même compteur que celui obtenu dans le procédé de chiffrement utilisé pour le chiffrement des données émises. On obtient ensuite une suite d'éléments binaires de déchiffrement qui est identique à la suite d'éléments binaires de chiffrement obtenue pour le bloc de données à chiffrer en fournissant comme paramètres d'entrée de la fonction de déchiffrement, la clé de chiffrement et le compteur. Puis on réalise une combinaison inverse de celle qui a été réalisée dans le procédé de chiffrement entre le bloc de données à chiffrer et la suite d'éléments binaires de chiffrement, cette combinaison inverse étant réalisée entre le bloc de données chiffré et la suite d'éléments binaires de déchiffrement. On obtient ainsi le bloc de données déchiffré.

La figure 4 illustre une opération de déchiffrement d'un bloc de données chiffré 16, selon un mode de réalisation de l'invention, dans lequel le chiffrement du bloc de données a été réalisé par une opération de ou exclusif entre le bloc de données à chiffrer et la suite d'éléments binaires de chiffrement. Le bloc de données chiffré associé à une référence temporelle est reçu côté récepteur. Ainsi, pour déchiffrer le bloc de données chiffré 16, on réalise une opération de ou exclusif entre le bloc de données chiffré et la suite d'éléments binaires de déchiffrement 15. On obtient ainsi le bloc de données déchiffré 12 associée à la référence temporelle correspondante 13 reçue en association avec le bloc de données chiffré 16.

Les sections suivantes détaillent un mode de réalisation de l'invention, dans lequel les données à transmettre sont des données de type multimédia. Elles peuvent être codées selon un protocole de type MPEG-4. Un bloc de données à chiffrer multimédia est noté par la suite AU, pour « Access Unit ». Une telle donnée peut correspondre à une donnée utile constituant une unité de traitement par le codeur et/ou le décodeur, comme par exemple une image pour la transmission d'une séquence d'images.

Comme cela a été décrit précédemment, une référence temporelle est associée à chaque AU. Cette référence temporelle est codée sur un nombre entier T de bits. La longueur d'une AU à chiffrer est égale à un nombre entier L de bits.

Un procédé de chiffrement selon un mode de réalisation de l'invention est un procédé de chiffrement par flot. Comme décrit précédemment, un procédé de ce type permet de chiffrer des données bit à bit. Afin de simplifier l'implémentation d'un tel procédé de chiffrement, dans un mode de réalisation de l'invention, une AU est découpée en un nombre entier m de sous blocs de taille fixe. A titre illustratif, on fixe la longueur de ces sous blocs égale à 128 bits. Ainsi, on peut écrire l'équation suivante :

$$m = (L \text{ div } 128) + 1.$$

On note $R_L$ la taille du dernier sous bloc composant l'AU à chiffrer. On peut écrire l'équation suivante :

$$R_L = (L \bmod 128).$$

On obtient donc par une telle découpe d'une AU, un nombre $(m-1)$ de sous blocs de longueur égale à 128 bits. Ces sous blocs sont notés $B_i$ pour i compris entre 1 et m-1. Le dernier sous bloc noté R a une longueur de $R_L$ bits.

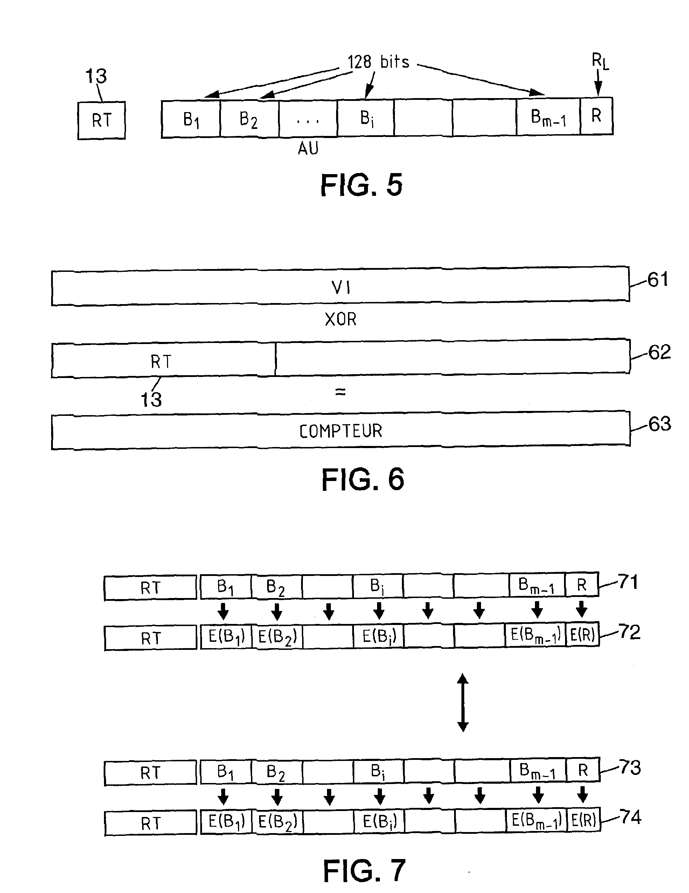

La figure 5 illustre un chiffrement d'un bloc de données à chiffrer associée à une référence temporelle selon un mode de réalisation de la présente invention, dans lequel le bloc de données à chiffrer est découpé en une pluralité de sous blocs $B_i$ comme cela est décrit ci-dessus.

La figure 6 illustre un procédé de génération d'un compteur dans un mode de réalisation dans lequel la valeur du vecteur d'initialisation VI 61 est combinée à une valeur générée à partir de la référence temporelle associée au bloc de données à chiffrer.

Dans cet exemple, le format de la référence temporelle 13 est inférieur à longueur fixe déterminé des sous blocs $B_i$ pour i compris entre 1 et m-1. On peut alors décaler le format de la référence temporelle 13 vers les bits de poids forts et donner aux bits de poids plus faible 62 des valeurs factices. Ces bits de poids plus faible sont dans cet exemple mis à la valeur 0. Ainsi la valeur à combiner avec la valeur du vecteur d'initialisation 61, afin d'obtenir un compteur, peut s'écrire sous la forme suivante :

T bits de la référence temporelle suivis de (128-T) bits de valeur 0.

On combine ensuite avantageusement la valeur à combiner ainsi obtenue avec la valeur du vecteur d'initialisation 61 par une opération de ou exclusif pour obtenir le compteur C 63.

La présente invention couvre toute autre méthode de générer une valeur à combiner au vecteur d'initialisation à partir d'une référence temporelle qui a une longueur inférieure au vecteur d'initialisation dans le but d'obtenir une valeur à combiner de même longueur que le vecteur d'initialisation. Dans un mode de réalisation de l'invention, le ou les destinataires connaissent cette méthode afin de pouvoir déchiffrer les données ainsi chiffrées, comme cela est détaillé dans d'autres sections.

A titre illustratif également, le procédé de chiffrement utilise une fonction de chiffrement de type AES. Plus particulièrement, une fonction de chiffrement de type AES de 128 bits en mode CTR, pour CompTeuR, normalisé dans un document référencé NIST SP 800-38A.

On note, pour la suite, CW la clé de chiffrement. Cette clé a de préférence une longueur égale à 128 bits. Le vecteur d'initialisation a également de préférence une longueur égale à 128 bits. Une valeur du vecteur d'initialisation est notée VI.

On note AES (CW, x) la suite d'éléments binaires de chiffrement obtenue via la fonction de chiffrement AES prenant comme paramètres d'entrée la clé de chiffrement CW et un compteur x.

On note par ailleurs 'XOR' l'opération de ou exclusif.

On définie la fonction de chiffrement E de telle sorte que, pour chaque sous bloc $B_i$ d'un bloc de données à chiffrer, i étant compris entre 1 et m-1, on a l'équation suivante :

$$E(B_i) = B_i \text{ XOR AES (CW, C+i)}$$

Pour le dernier sous bloc R de longueur $R_L$ bits, on a l'équation suivante :

E(R) = R XOR [premiers $R_L$ bits de AES (CW, C+m)].

Puis, on peut alors transmettre l'AU ainsi chiffrée.

Le procédé de chiffrement est ensuite réitéré pour chaque AU.

La figure 7 illustre un mode de réalisation de la présente invention tel que décrit ci-dessus. Dans une première partie, le chiffrement d'une première AU 71 est illustré. La première AU est découpée en m sous blocs comme cela a été décrit précédemment. Puis, pour chaque sous bloc $B_i$ des (m-1) premiers sous blocs, on obtient $E(B_i)$. Puis pour le dernier sous bloc R, on obtient E(R).

L'AU ainsi chiffrée 72 est associée à la référence temporelle 13 avec la même valeur que la référence temporelle déjà associée à l'AU à chiffrer.

Dans une seconde partie, le chiffrement d'une seconde AU 73 en une AU chiffrée 74 est illustré.

On note que la première et la seconde AU sont avantageusement chiffrées de manière indépendante.

Dans un mode de réalisation de la présente invention, un procédé de déchiffrement des données ainsi chiffrées est basé sur la fonction de déchiffrement noté D qui vérifie l'équation suivante, pour chaque sous bloc Bi, i étant compris entre 1 et m-1 :

$$D(Bi) = E(Bi) \text{ XOR AES } (CW, C + i).$$

Pour le dernier sous bloc, R, on peut écrire l'équation suivante:

$$D(R) = E(R) \text{ XOR [premiers } R_L \text{ bits de AES (CW, C+m)]}.$$

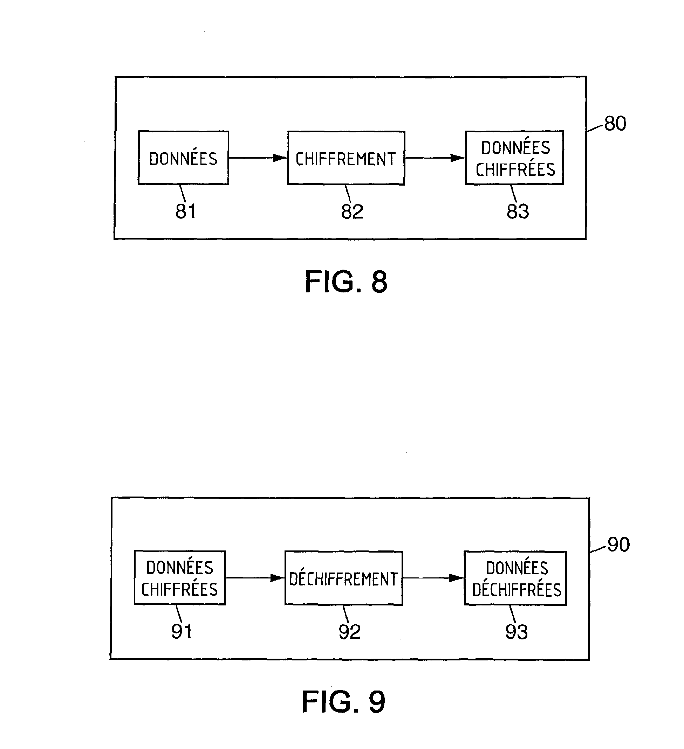

Dans un mode de réalisation de la présente invention, un dispositif de chiffrement met avantageusement en oeuvre un procédé de chiffrement selon l'invention. La figure 8 illustre un tel dispositif de chiffrement 80, comprenant une entité de stockage 81 des données à chiffrer, une entité de chiffrement 82 des données à chiffrer et une entité de stockage 83 des données chiffrées.

Dans un mode de réalisation de la présente invention, un dispositif de déchiffrement met avantageusement en oeuvre un procédé de déchiffrement selon l'invention. La figure 9 illustre un tel dispositif de déchiffrement 90, comprenant une entité de stockage 91 des données chiffrées à déchiffrer, une entité de déchiffrement 92 des données à déchiffrer et une entité de stockage 93 des données déchiffrées.

Des données chiffrées par un procédé selon l'invention peuvent être avantageusement stockées sur un support quelconque de stockage de données numériques.

Dans un mode de réalisation de la présente invention, le procédé de déchiffrement utilise avantageusement le même algorithme de chiffrement que celui utilisé dans le procédé de chiffrement. Il génère de préférence le même compteur que celui généré dans le procédé de chiffrement à partir de la référence temporelle associée au bloc de données chiffré, qui est identique à celle associée au bloc de donnée à chiffrer correspondant. La valeur du compteur d'initialisation est synchronisée entre le côté émetteur de données chiffrées et le côté récepteur. Par conséquent, les données chiffrées reçues sont avantageusement déchiffrées sans avoir à transporter des informations spécifiques au chiffrement.

Un procédé de chiffrement et de déchiffrement selon un mode de réalisation de l'invention peut être avantageusement mis en oeuvre dans les dispositifs de transmission en flux continu, ou encore « streaming » en anglais.

La présente invention peut offrir une grande souplesse quant à la taille des blocs de données à chiffrer et permet donc de chiffrer des blocs de données de tailles très variables. L'invention permet la transmission de données multimédia sur des réseaux de transport hétérogènes. En effet, l'invention peut être mis en oeuvre sur tout support de transport de blocs de données associés à une valeur de référence temporelle.

En outre, l'invention permet avantageusement de ne pas propager une erreur en cas de perte d'un paquet de données puisque on peut chiffrer un bloc de données indépendamment des autres blocs de données à chiffrer.

**Revendications**

1. Procédé de chiffrement de blocs de données numériques, chaque bloc de données à chiffrer (12) étant associé à une référence temporelle (13), suivant lequel on définit une valeur d'un vecteur d'initialisation VI (10) et une clé de chiffrement K (19),
   ledit procédé comprenant, pour chaque bloc de données à chiffrer, les étapes consistant à :

- obtenir un compteur C (14), par combinaison de ladite référence temporelle (13) et de ladite valeur du vecteur d'initialisation (10) ;
- obtenir une suite d'éléments binaires de chiffrement (15) via une fonction de chiffrement prenant comme paramètres d'entrée ladite clé de chiffrement K (19) et ledit compteur C (14) ;
- chiffrer ledit bloc de données en le combinant avec ladite suite d'éléments binaires de chiffrement (15).

2. Procédé selon la revendication 1, suivant lequel on définit une nouvelle valeur du vecteur d'initialisation (10) à une fréquence telle que les références temporelles (13) associées aux blocs de données à chiffrer sont uniques pour une valeur du vecteur d'initialisation donnée.

3. Procédé selon l'une quelconque des revendications précédentes, suivant lequel la combinaison de la référence temporelle (13) et de la valeur du vecteur d'initialisation (10) comprend une opération de ou exclusif.

4. Procédé selon l'une quelconque des revendications précédentes, suivant lequel la combinaison du bloc de données à chiffrer (12) et de la suite d'éléments binaires de chiffrement (15) comprend une opération de ou exclusif.

5. Procédé selon l'une quelconque des revendications précédentes, suivant lequel la fonction de chiffrement est une fonction de type AES.

6. Procédé selon l'une quelconque des revendications précédentes, suivant lequel les blocs de données à chiffrer (12) sont des blocs de données multimédia.

7. Procédé selon l'une quelconque des revendications précédentes, suivant lequel on décompose le bloc de données à chiffrer en une pluralité de sous blocs de longueur fixe déterminée , le cas échéant le dernier sous bloc étant de longueur inférieure, et
suivant lequel on chiffre chacun desdits sous blocs, sous bloc par sous bloc.

8. Procédé selon la revendication 7, suivant lequel

- la longueur fixe déterminée est égale à B bits, B étant un nombre entier ;
- le bloc de données à chiffrer est de longueur L bits, L étant un nombre entier supérieur audit nombre entier B,
- la référence temporelle associée est de longueur T bits, T étant un nombre entier inférieur audit nombre entier B ;
- le vecteur d'initialisation VI est de longueur B bits ;

suivant lequel on détermine une valeur binaire de la référence temporelle sur B bits, les T bits de poids le plus fort correspondant à ladite référence temporelle, les (B-T) bits de poids plus faible étant de valeur 0, et
suivant lequel on obtient le compteur par l'opération d'un ou exclusif entre la valeur binaire de ladite référence temporelle sur B bits et la valeur du vecteur d'initialisation VI.

9. Procédé selon l'une quelconque des revendications 1 à 8, comprenant une étape ultérieure d'encodage des blocs de données chiffrés avant transmission des blocs de données chiffrés et encodés.

10. Procédé selon l'une quelconque des revendications 1 à 8, comprenant une étape ultérieure de stockage des blocs de données chiffrées sur un support de mémoire amovible.

11. Dispositif de chiffrement de blocs de données numériques, chaque bloc de données à chiffrer (12) étant associé à une référence temporelle (13), suivant lequel on définit une valeur d'un vecteur d'initialisation VI (10) et une clé de chiffrement K (19),
ledit dispositif comprenant des moyens agencés pour mettre en oeuvre un procédé de chiffrement selon l'une quelconque des revendications précédentes.

12. Procédé de déchiffrement de blocs de données numériques, chaque bloc de données à déchiffrer (16) étant associé à une référence temporelle (13), lesdits blocs de données étant chiffrés par un procédé de chiffrement selon l'une quelconque des revendications 1 à 10,
suivant lequel on définit une valeur d'un vecteur d'initialisation et une clé de chiffrement synchrone avec la valeur du vecteur d'initialisation (10) et la clé de chiffrement (19) utilisées dans ledit procédé de chiffrement,
ledit procédé de déchiffrement comprenant, pour chaque bloc de données à déchiffrer, les étapes consistant à :

- obtenir un compteur, par combinaison de ladite référence temporelle et de ladite valeur du vecteur d'initialisation ;
- obtenir une suite d'éléments binaires de déchiffrement (15) via une fonction de déchiffrement prenant comme paramètres d'entrée ladite clé de chiffrement et ledit compteur, ladite fonction de déchiffrement étant équivalente à la fonction de chiffrement utilisée dans ledit procédé de chiffrement ;
- déchiffrer ledit bloc de données chiffré en le combinant avec ladite suite d'éléments binaires de déchiffrement (15), via une combinaison inverse de celle utilisée dans ledit procédé de chiffrement.

13. Procédé selon la revendication 12, suivant lequel on décompose le bloc de données à déchiffrer en une pluralité de sous blocs de longueur fixe déterminée, le cas échéant le dernier sous bloc étant de longueur inférieure, et suivant lequel on déchiffre chacun desdits sous blocs, sous bloc par sous bloc.

14. Procédé selon la revendication 13, suivant lequel :

- la longueur fixe déterminée est égale à B bits, B étant un nombre entier ;
- le bloc de données à chiffrer est de longueur L bits, L étant un nombre entier supérieur audit nombre entier B,
- la référence temporelle associée est de longueur T bits, T étant un nombre entier inférieur audit nombre entier B ;
- le vecteur d'initialisation VI est de longueur B bits ;

suivant lequel on détermine une valeur binaire de la référence temporelle sur B bits, les T bits de poids le plus fort correspondant à ladite référence temporelle et les (B-T) bits de poids plus faible étant de valeur 0, et
suivant lequel on obtient le compteur par l'opération d'un ou exclusif entre la valeur binaire de ladite référence temporelle sur B bits et la valeur du vecteur d'initialisation VI.

15. Dispositif de déchiffrement de blocs de données numériques, chaque bloc de données à déchiffrer étant associé à une référence temporelle, et étant chiffré par un procédé de chiffrement selon l'une quelconque des revendications 1 à 10,
ledit dispositif comprenant des moyens agencés pour mettre en oeuvre un procédé de déchiffrement selon l'une des revendications 12 à 14.

16. Produit programme d'ordinateur, destiné à être stocké dans une mémoire d'une unité de traitement, ou sur un support mémoire amovible et destiné à coopérer avec un lecteur de ladite unité de traitement, ledit produit programme d'ordinateur comprenant des instructions pour la mise en oeuvre de tout ou partie des étapes du procédé selon l'une quelconque des revendications 1 à 10.

17. Produit programme d'ordinateur, destiné à être stocké dans une mémoire d'une unité de traitement, ou sur un support mémoire amovible et destiné à coopérer avec un lecteur de ladite unité de traitement, ledit produit programme d'ordinateur comprenant des instructions pour la mise en oeuvre de tout ou partie des étapes du procédé selon l'une quelconque des revendications 12 à 14.

13 ── RT │ DONNÉES À CHIFFRER ── 12

10

VI ──→ ○ ── 17

COMPTEUR ── 14

19

K ──→ ALGORITHME DE CHIFFREMENT ── 18

SUITE D'ÉLÉMENTS BINAIRES DE CHIFFREMENTS ── 15

DONNÉES CHIFFRÉES ── 16

**FIG. 1**

```
        ┌─────────────────────────┐
        │  DONNÉES À CHIFFRER      │──21
        └─────────────────────────┘
                    │
                    ▼
  24 ──→  ┌─────────────────────────┐
          │  CHIFFREMENT PAR        │──22
  25 ──→  │       FLUX              │
          └─────────────────────────┘
                    │
                    ▼
        ┌─────────────────────────┐
        │  DONNÉES CHIFFRÉES       │──23
        └─────────────────────────┘
```

# FIG. 2

```
13──┌─────┐┌──────────────────────────────────┐
    │ RT  ││  DONNÉE À CHIFFRER               │──12
    └─────┘└──────────────────────────────────┘
                        XOR
          ┌──────────────────────────────────┐
          │  SUITE D'ÉLÉMENTS BINAIRES        │──15
          └──────────────────────────────────┘
                         ▼
13──┌─────┐┌──────────────────────────────────┐
    │ RT  ││  DONNÉE CHIFFRÉE                 │──16
    └─────┘└──────────────────────────────────┘
```

# FIG. 3

```
13──┌─────┐┌──────────────────────────────────┐
    │ RT  ││  DONNÉE CHIFFRÉE                 │──16
    └─────┘└──────────────────────────────────┘
                        XOR
          ┌──────────────────────────────────┐
          │  SUITE D'ÉLÉMENTS BINAIRES        │──15
          └──────────────────────────────────┘
                         ▼
13──┌─────┐┌──────────────────────────────────┐
    │ RT  ││  DONNÉE DÉCHIFFRÉE               │──12
    └─────┘└──────────────────────────────────┘
```

# FIG. 4

13

128 bits

RT

B₁ | B₂ | ... | Bᵢ | | | Bₘ₋₁ | R

R_L

AU

## FIG. 5

VI — 61

XOR

RT — 62

13

≈

COMPTEUR — 63

## FIG. 6

RT | B₁ | B₂ | | Bᵢ | | | Bₘ₋₁ | R — 71

RT | E(B₁) | E(B₂) | | E(Bᵢ) | | | E(Bₘ₋₁) | E(R) — 72

RT | B₁ | B₂ | | Bᵢ | | | Bₘ₋₁ | R — 73

RT | E(B₁) | E(B₂) | | E(Bᵢ) | | | E(Bₘ₋₁) | E(R) — 74

## FIG. 7

**FIG. 8**

**FIG. 9**

**Office européen**
**des brevets**

**RAPPORT DE RECHERCHE EUROPEENNE**

Numéro de la demande

EP 04 29 1561

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 843 258 A (EADS DEFENCE AND SECURITY NETW) 6 février 2004 (2004-02-06)<br>* abrégé *<br>* page 14, ligne 32 - page 21, ligne 20 *<br>* page 25, ligne 25 - page 28, ligne 9 *<br>* figures 1,4-7,10 *<br>----- | 1-4,7-9, 11-17 | H04L9/12<br>H04L9/18 |
| X | US 2002/044651 A1 (TUVELL WALTER E) 18 avril 2002 (2002-04-18)<br><br>* alinéa [0006] - alinéa [0018] *<br>* alinéa [0030] - alinéa [0032] *<br>* figure 1 *<br>----- | 1-5,7, 11-13, 15-17 | |
| X | US 4 145 568 A (EHRAT KURT) 20 mars 1979 (1979-03-20)<br>* abrégé *<br>* colonne 5, ligne 18 - colonne 6, ligne 49; figure 1 *<br>----- | 1-4,7, 11-13,15 | |

**DOMAINES TECHNIQUES RECHERCHES (Int.Cl.7)**

H04L

Le présent rapport a été établi pour toutes les revendications

| Lieu de la recherche | Date d'achèvement de la recherche | Examinateur |
|---|---|---|
| La Haye | 12 novembre 2004 | Dujardin, C |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 04 29 1561

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-11-2004

| Document brevet cité au rapport de recherche | | Date de publication | Membre(s) de la famille de brevet(s) | | Date de publication |
|---|---|---|---|---|---|
| FR 2843258 | A | 06-02-2004 | FR | 2843258 A1 | 06-02-2004 |
| | | | WO | 2004014019 A1 | 12-02-2004 |
| US 2002044651 | A1 | 18-04-2002 | WO | 0189138 A2 | 22-11-2001 |
| | | | AU | 6146801 A | 26-11-2001 |
| US 4145568 | A | 20-03-1979 | CH | 411983 A | 30-04-1966 |
| | | | DE | 1207426 B | 23-12-1965 |
| | | | FR | 1414132 A | 15-10-1965 |
| | | | GB | 1062130 A | 15-03-1967 |
| | | | NL | 6411267 A | 20-04-1965 |

EPO FORM P0460

Pour tout renseignement concernant cette annexe : voir Journal Officiel de l'Office européen des brevets, No.12/82